# EUROPEAN PATENT APPLICATION

(11) **EP 1 528 357 A2**
(43) Date of publication of application: **04.05.2005**
(21) Application number: 04024740.5
(22) Date of filing: 18.10.2004
(51) Int. Cl.: G01C 9/00

(54) **Apparatus and method for detecting the angle of tilt of a support plane**

(30) Priority: 31.10.2003 IT MO20030296
(71) Applicant: Aron S.p.A., 42100 Reggio Emilia (IT)
(72) Inventor: Bernardi, Matteo, 42035 Monti (RE) (IT); Bartoli, Maurizio, 42100 Reggio Emilia (IT); Cerioli, Alessandro, 42020 Barco di Bibbiano (RE) (IT)
(74) Representative: Luppi, Luigi

(57) **Abstract**

A control apparatus comprises tilt detecting means suitable for detecting the angle of tilt of a support plane (2) in relation to a reference plane, logic unit means (11, 12) suitable for processing the value of said angle and generating a drive signal for actuating means (5) acting on said support plane (2) and safety means (13) suitable for stopping said support plane, said tilt detecting means comprising at least two independent position sensors (9, 10); a method for controlling an electronic card comprises acquiring through logic unit means (11) signals coming from sensor means (9), processing said signals to obtain data indicating the position of an organ (2) with which said sensor means (9) is associated, sending control signals to safety means (13), and, before said sending, transmitting through said logic unit means (11) said data to further logic unit means (12) of said electronic card and receiving through said logic unit means (11) further data from said further logic unit means (12).

## Description

The present invention relates to a levelling apparatus associatable with a support plane of an operating machine to keep said support plane in a substantially horizontal position.

These operating machines may comprise airborne platforms, machines for harvesting fruit, machines for harvesting vegetables and other similar machines in which the support plane - comprising, for example, a basket - is arranged to accommodate one, or more, operators.

The basket, during operation of the machines, has to be kept in a horizontal position at all times, in such a way as not to jeopardize the stability of the operator accommodated therein. Levelling devices for operating machines are known comprising a tilt sensor fixed to a support plane of these machines and arranged to detect the angle of tilt thereof in relation to the vertical and a hydraulic actuator suitable for rotating the support plane in relation to a support arm of the support plane to keep the support surface in a substantially horizontal position.

The levelling devices furthermore comprise a logic unit that receives the value of the angle of tilt from the tilt sensor and processes a command signal for the actuator.

A safety switch is furthermore provided, controlled by the logic unit which, if the width of the angle of tilt exceeds a set value, stops the support plane - and if necessary the machines - such that the operator on the support plane is not in a dangerous situation.

A drawback of the levelling devices disclosed above consists of the fact that they do not protect the operator from the consequences of possible faults that affect the levelling devices.

In order to surmount this drawback, known levelling devices may furthermore comprise a mercury safety switch.

When the angle of tilt of the support plane exceeds a preset value, the mercury, by flowing inside the switch, causes the contacts of the switch to open, thus causing the support plane to stop.

Nevertheless, the mercury switch operates on the basis of mechanical actuation of the electrical contacts with which it is provided, this actuation being achieved by the mercury itself.

As a result, the mercury switch is scarcely reliable.

An object of the invention is to improve the levelling devices associatable with support planes of operating machines.

Another object is to obtain a control apparatus of a levelling device that enables a high degree of safety to be achieved during operation of the levelling device itself.

A further object of the invention is to obtain a method for controlling an electronic card that receives signals from a sensor and processes these signals to control the operation of a device with which the sensor is associated and of safety means of this device.

A yet further object is to obtain a method for controlling an electronic card suitable for being associated with a levelling device of a support plane.

In a first aspect of the invention, a control apparatus is provided comprising tilt detecting means suitable for detecting the angle of tilt of a support plane in relation to a reference plane, logic unit means suitable for processing the value of said angle and generating a drive signal for actuating means acting on said support plane and safety means suitable for stopping said support plane, characterised in that said tilt detecting means comprises at least two independent position sensors.

Owing to this aspect of the invention, the value of the angle of tilt is detected independently by two different sensors.

Subsequently, the logic unit means compares the value measured by one of the sensors with the value of the angle of tilt measured by the other sensor.

If there is no correspondence between the measured values, the logic unit means actuates the safety means in such a way as to stop the support plane means.

In an embodiment, the safety means comprises two distinct safety devices, for example two 'serially connected switches.

Providing a pair of switches enables improved safety to be obtained compared with prior-art devices.

In particular, owing to this aspect of the invention, by acting on one of the switches it is possible to stop the support plane even if the other switch is out of use.

Similarly, providing a pair of independent tilt sensors prevents the operating machine from operating in conditions of potential danger, even if one of the above sensors does not work correctly.

In another embodiment, the logic unit means comprises a pair of independent and intercommunicating logic units.

In a further embodiment, each logic unit of the pair of logic units controls and drives the safety means independently of the other logic unit of the pair of logic units.

Owing to this aspect of the invention, it is possible to obtain a levelling apparatus provided with a category 3 degree of safety, according to the provisions of Italian standard UNI EN 954-1 and European standards EN 954-1 and EN 954-2.

In a second aspect of the invention, a method is provided for controlling an electronic card, comprising acquiring through logic unit means signals coming from sensor means, processing said signals to obtain data indicating the position of an organ with which said sensor means is associated, sending control signals to safety means, characterised in that it furthermore comprises, before said sending, transmitting through said logic unit means said data to further logic unit means of said electronic card and receiving through said logic unit means further data from said further logic unit means.

Owing to this aspect of the invention, it is possible to obtain an electronic card that is provided with a high degree of safety, inasmuch as the data are transmitted from each of the sensor means to a respective logic unit, which, before controlling the safety means, exchanges the data processed by it with the other logic unit and checks that the data processed by it are congruent with those received from the other logic unit.

In other words, the drive signal transmitted by each logic unit to the safety means arises from the comparison - made independently and parallel by the logic units - of the data processed by a logic unit with those processed by the other logic unit.

Furthermore, owing to the invention, each logic unit independently controls and drives the safety means.

This method enables electronic cards to be controlled that are intended for a plurality of uses.

In an embodiment, the method enables an electronic card of a levelling apparatus of a support plane of an operating machine to be controlled.

In another embodiment, the method enables an electronic card to be controlled that is used for controlling the speed of a vehicle provided with an electronic throttle.

In this case, the sensor means comprises a pair of independent sensors associated with the lever of the throttle of the above-mentioned vehicle.

If the lever is released by a user, for example by lifting his foot that presses on it, an activating signal is generated for slowing down the vehicle.

Owing to the method according to the invention, the signal is also generated if one of the sensors does not work correctly.

The invention can be better understood and actuated with reference to the attached drawings that illustrate an embodiment thereof by way of non-limitative example, in which:
Figure 1 is a side view of a basket of an operating machine provided with a support plane with which a levelling apparatus is associated;
Figure 2 is an operating diagram of the levelling apparatus in Figure 1;
Figures 3 and 3A show a block diagram that illustrates an operating method of a logic unit of the levelling apparatus in Figure 1;
Figure 4 is a block diagram that illustrates a phase of the method in Figures 3 and 3A;
Figures 5 and 5A show a block diagram that shows an operating method of a further logic unit of the levelling apparatus in Figure 1;
Figure 6 is a block diagram that illustrates a phase of the method in Figures 5 and 5A.

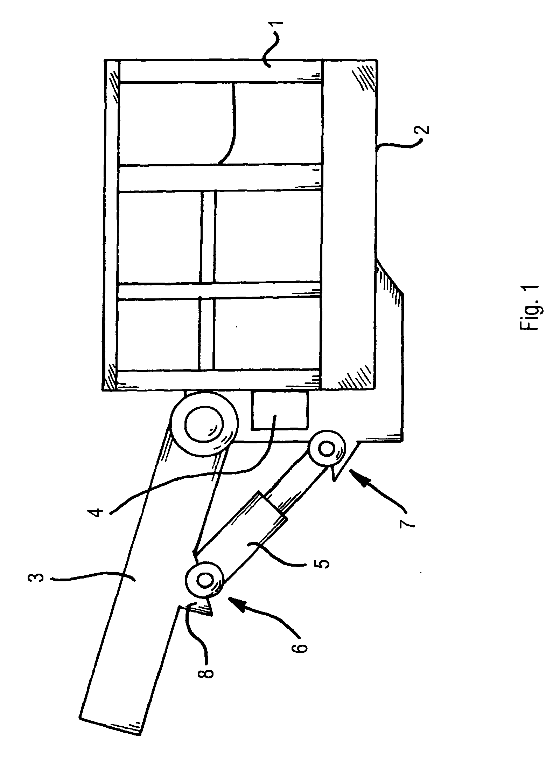

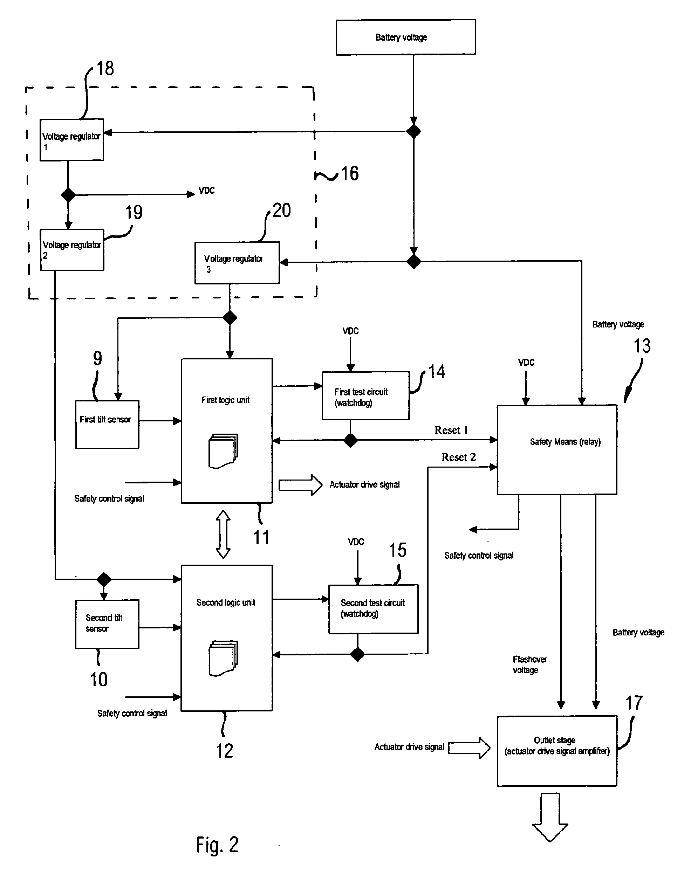

With reference to Figures 1 and 2, there is shown a basket 1 of an operating machine delimited at the bottom by a support plane 2 arranged for accommodating one or more operators resting thereupon.

The operating machine is provided with a lifting arm 3 arranged to move the support plane 2 hinged thereupon.

To the basket 1 there is fixed a levelling device 4 arranged to keep the support plane 2 horizontal as the latter is moved by means of the lifting arm 3.

The operating machine furthermore comprises an actuator 5, for example a dual-effect hydraulic actuator having a first end 6 hinged on an appendage 8 of the lifting arm 3 and a second end 7 hinged on the basket 1.

The actuator 5, driven by the levelling device 4, enables the basket 1 to be rotated in relation to the lifting arm 3, in such a way that the support surface 2 is kept horizontal during operation of the operating machine.

The levelling device 4 comprises a first tilt sensor 9 and a second tilt sensor 10 that are integral with the support plane 2, the first tilt sensor 9 and the second tilt sensor 10 being arranged to detect, independently of one another, the angle of tilt of the support plane 2 in relation to the vertical.

The levelling device 4 furthermore comprises a first logic unit 11 and a second logic unit 12, the first tilt sensor 9 communicating the value of the angle of tilt detected by it to the first logic unit 11 and the second tilt sensor 10 communicating the value of the angle of tilt detected by it to the second logic unit 12.

The first logic unit 11 generates a signal that drives the supply of the actuator 5 and therefore the rotation of the support plane 2 in relation to the lifting arm 3.

Before being transmitted to the actuator 5, the signal is amplified by an outlet stage 17 with which the levelling apparatus 4 is provided.

The levelling device 4 is furthermore provided with safety means 13 comprising a pair of serially connected relays that control the outlet stage 17 and therefore the transmission of the drive signal to the actuator 5.

The safety means 3 is controlled by each logic unit independently, the logic units driving the relays if a danger situation should arise, as will be disclosed in detail below.

The levelling device 4 furthermore comprises first control means 14 connected to the first logic unit 11 and second control means 15 connected to the second logic unit 12.

The levelling device 4 comprises an electric supply circuit 16 that is divided into independent sectors, in such a way as to ensure operation of the safety systems even if a fault occurs in one of the sectors that make it up.

The electric supply circuit comprises a first voltage regulator 18, a second voltage regulator 19 and a third voltage regulator 20 that identify the above three independent sectors in the supply circuit 16.

Operation of the levelling device 4 occurs in the manner indicated below.

The first tilt sensor 9 and the second tilt sensor 10 send independently of one another an electric signal that is proportional to the angle of tilt of the support plane 2 in relation to the vertical to the first logic unit 11 and to the second logic unit 12, respectively.

The first logic unit 11 and the second logic unit 12 exchange between themselves these signals, each logic unit comparing the signals acquired from the respective tilt sensor and the signals acquired from the other logic unit to check their congruence.

If the signals are congruent - i.e. if the width of the angle of tilt measured by the first tilt sensor 9 corresponds to the width of the angle of tilt measured by the second sensor 10 - the first logic unit 11 processes a signal that, through the outlet stage 17, is transmitted to a hydraulic valve that commands the actuator 5, thereby adjusting the quantity of oil that is inserted into the cylinder of the latter.

If the signals are not congruent - i.e. if the width of the angle of tilt measured by the first tilt sensor 9 does not correspond to the width of the angle of tilt measured by the second sensor 10 - the first logic unit 11 and the second logic unit 12 intervene independently on the safety means 13 thereby inhibiting the outlet stage 17 - and consequently actuation of the actuator 5 - and thereby sending alarm signals to the operator.

If the value of the angle of tilt detected by the first tilt sensor 9 and/or the value of the angle of tilt detected by the second tilt sensor 10 fall outside a preset range of values - due to the excessive tilt of the support plane 2, or the poor operation of the tilt sensors - the first logic unit 11 and the second logic unit 12 intervene independently on the safety means 13, thereby inhibiting actuation of the actuator 5 and thereby sending alarm signals to the operator.

The first logic unit 11 and the second logic unit 12 have to send a signal of correct operation to the first control means 14 and to the second control means 15 respectively at preset intervals of time.

If this signal does not reach the first control means 14 and the second control means 15 within the preset time - due to incorrect operation of the first logic unit 11 and/or of the second logic unit 12 - the first control means 14 and the second control means 15 stop the first logic unit 11 and the second logic unit 12 and simultaneously intervene independently on the safety means 13, thereby inhibiting actuation of the actuator 5 and sending alarm signals to the operator.

Furthermore, if the supply circuit 16 or one of the sectors that make it up does not function correctly, for example because of a short circuit, overcurrent, overvoltage or insufficient voltage, the first logic unit 11 and the second logic unit 12 intervene independently on the safety means 13, thereby preventing actuation of the actuator 5 and sending alarm signals to the operator.

The first logic unit 11 and the second logic unit 12 control operation of the safety means 13 by means of further signals generated and transmitted by the safety means.

If the first logic unit 11 and the second logic unit 12 detect a fault - due, for example, to damage to the safety means 13 - in one of the further signals, they intervene independently on the safety means 13, thereby inhibiting actuation of the actuator 5 and sending alarm signals to the operator.

The first logic unit 11 and the second logic unit 12 carry out a double control of the relays with which the safety means 13 is provided.

A first control is designed to check a logic state that indicates the presence of an electrical contact between the clamps of each relay.

A second control is designed to assess the value of the voltage between the clamps.

The above dual control enables the fact to be ruled out that the clamps have been placed in contact, without there however being voltage between them of the desired level that permits a clear and strong signal.

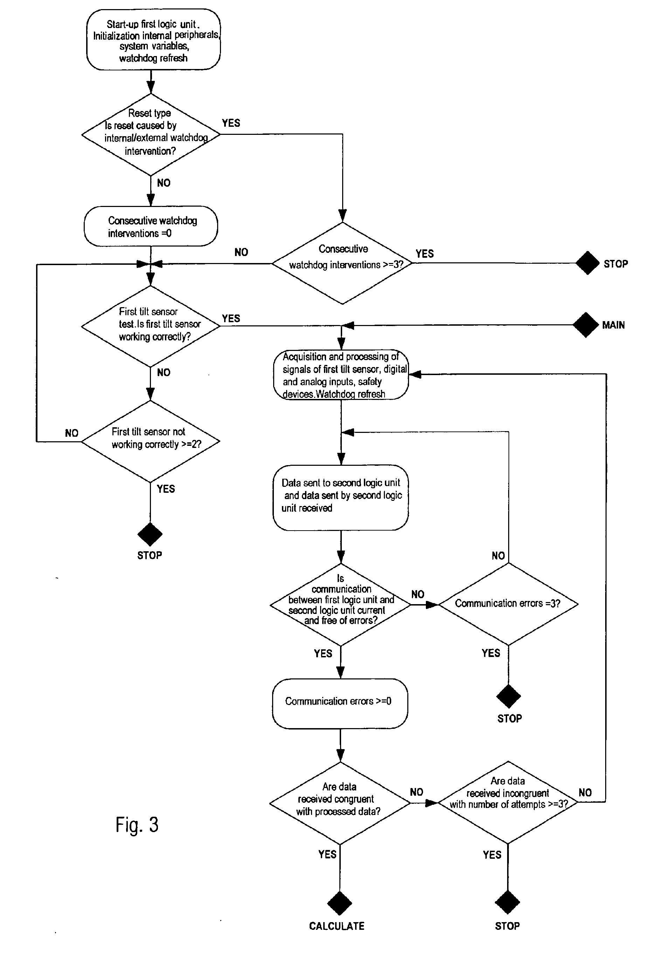

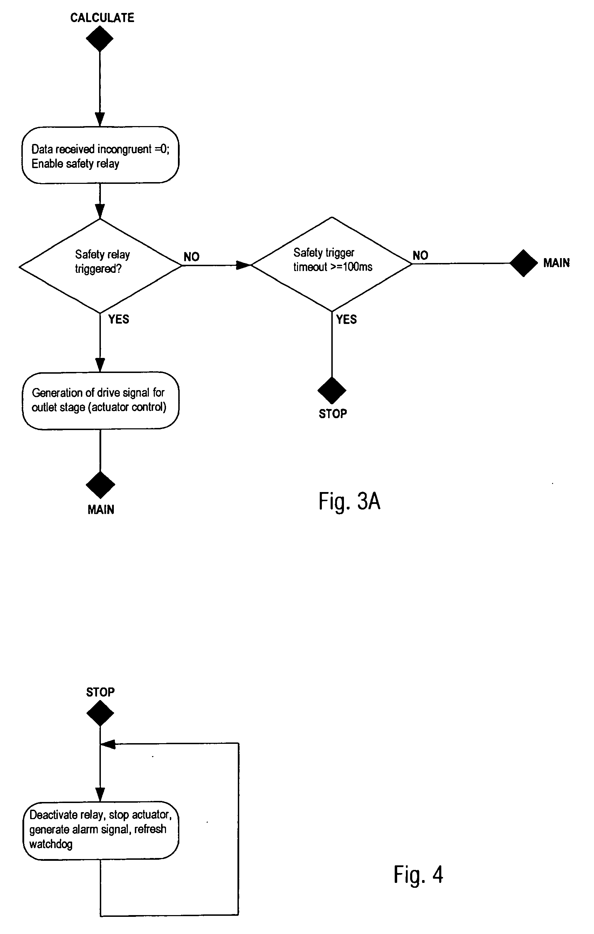

With reference to Figures 3 and 3A there is shown a flow chart that shows an operating method of the first logic unit 11 for controlling the safety of the levelling device 4.

Figure 4 shows a phase of the method.

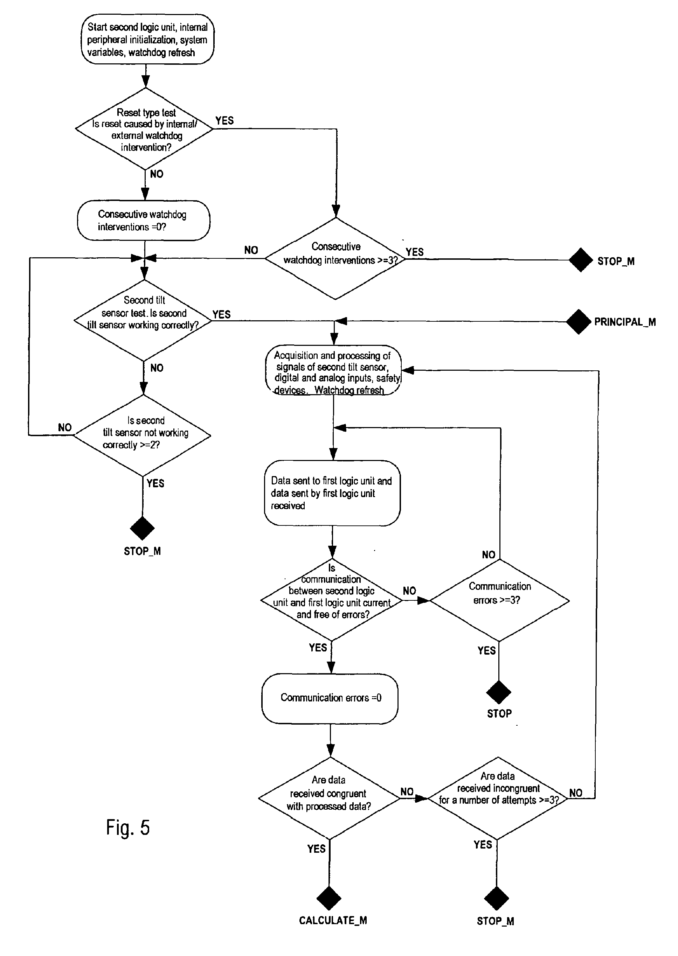

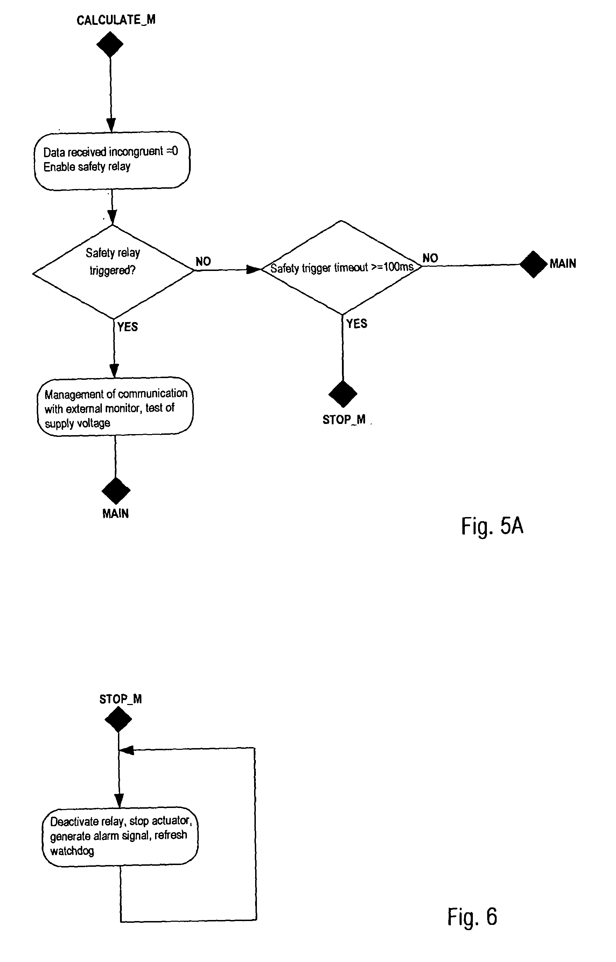

With reference to Figures 4 and 5 there is shown a flow chart that shows an operating method of the second logic unit 12 for controlling the safety of the levelling device 4.

Figure 6 shows a phase of the method.

For simplicity, as the operating methods have substantial similarities, only the operating manner of the first logic unit 11 will be examined in detail hereinafter.

Upon start-up of the first logic unit 11, the internal peripherals of the latter are initialised and with them the system variables.

Simultaneously, the counter of the interventions conducted by control devices, known as watchdogs, with which the levelling device 4 is provided, is set to zero.

These control devices comprise the first control means 14 and further control means, provided inside the first logic unit 11 and arranged to control correct operation of the first logic unit 11.

In particular, the further control means check that the supply voltage of the first logic unit 11 is not below a given value. Subsequently, an "occurred reset-type" test is conducted.

If the reset has been caused by three consecutive interventions of the first control means 14, or of the further control means, a stop procedure is started that consists of deactivating the relays of the safety means 13, of disabling the controls of the actuator 5 and of generating alarm signals for an operator.

If the control means has intervened zero times or fewer than three times, a check of the operation of the first tilt sensor 9 is conducted.

If this check yields a negative result twice consecutively, the stop procedure disclosed above is run.

If the check of the operation of the first tilt sensor yields a positive result, the signals generated by the first tilt sensor 9 are acquired and processed, the signals generated by the safety means 13 are acquired, and the counter of the interventions of the first control means 14 and of the further control means is set to zero.

Subsequently, the first logic unit 11 transmits the data obtained from the signals to the second logic unit 12 and receives further data obtained from further signals transmitted by the second logic unit 12, such further signals relating to the angle of tilt of the support plane 2, measured by the second tilt sensor 10 and communicated to the second logic unit 12.

Subsequently again, correct communication between the first logic unit 11 and the second logic unit 12 is checked.

If this test yields a negative result, transmission and reception are repeated.

If the above test yields a negative result three times consecutively, the stop procedure disclosed above is run.

If on the other hand communication between the first logic unit 11 and the second logic unit 12 is free of errors, the first logic unit compares the data received by the second logic unit 12 with the data generated by the first logic unit 11 on the basis of the signals transmitted by the first tilt sensor 9.

If the data sent by the second logic unit 12 are not congruent with the data processed by the first logic unit 11, the first logic unit 11 again acquires and processes the signals transmitted by the first tilt sensor 9.

If checking congruency between the data sent by the second logic unit 12 and the data processed by the first logic unit 11 yields a negative result three times consecutively, the stop procedure disclosed above is run.

Otherwise, the relays of the safety means are enabled if the logic unit has just been started, or they are kept enabled if they had already been enabled previously.

Subsequently, actual enabling of the safety relays is checked. If this check yields a negative result, it is assessed whether the delay in enabling the relays is greater than 100 milliseconds.

If the answer is affirmative, the stop procedure disclosed above is carried out.

If the answer is negative, the first logic unit 11 again acquires and processes the signals transmitted by the first tilt sensor 9.

If the check of actual enabling of the safety relays yields a positive result, the first logic unit performs an algorithm that produces a signal suitable for determining the quantity of operating fluid that the hydraulic valve delivers to the actuator 5 and consequently the rotation of the support plane 2 in relation to the lifting arm 3.

The operating modes of the second logic unit 12 are substantially the same as those of the first logic unit, which have been disclosed above.

If the check of actual enabling of the safety relays conducted by the second logic unit 12 yields a positive result, the second logic unit manages communication with an external monitor through which an operator can control operation of the levelling device 4 and furthermore control the voltage of the supply circuit 16.

It should be noted that the main phases of the method disclosed above, i.e. the acquisition of the signals from the respective sensor, the processing of the data obtained from the above signals, the sending of the processed data to the other logic unit and the reception of the data processed by the other logic unit, the comparison of the processed data with the received data and the control of the safety means are conducted in parallel by each logic unit.

## Claims

1. Control apparatus, comprising tilt detecting means suitable for detecting the angle of tilt of a support plane (2) in relation to a reference plane, logic unit means (11, 12) suitable for processing the value of said angle and generating a drive signal for actuating means (5) acting on said support plane (2) and safety means (13) suitable for stopping said support plane (2), **characterised in that** said tilt detecting means comprises at least two independent position sensors (9, 10).

2. Apparatus according to claim 1, wherein said safety means (13) comprises at least two distinct safety devices.

3. Apparatus according to claim 1, or 2, wherein said safety means (13) comprises a pair of serially connected relays.

4. Apparatus according to any preceding claim, wherein said safety means (13) controls an outlet stage (17) of said apparatus arranged for transmitting said drive signal to said actuating means (5).

5. Apparatus according to any preceding claim, wherein said logic unit means comprises at least two logic units (11, 12).

6. Apparatus according to claim 5, wherein said at least two logic units comprise a first logic unit (11) arranged for receiving and processing signals detected by a first tilt sensor (9) of said at least two tilt sensors to obtain data indicating the position of said support plane (2) and a second logic unit (12) arranged for receiving and processing further signals detected by a second tilt sensor (10) of said at least two tilt sensors to obtain further data indicating the position of said support plane (2).

7. Apparatus according to claim 6, wherein said first logic unit (11) is configured in such a way as to send said data to said second logic unit (12) and to receive said further data from said second logic unit (12).

8. Apparatus according to claim 6, or 7, wherein said second logic unit (12) is configured in such a way as to send said further data to said first logic unit (11) and receive said data from said first logic unit (11).

9. Apparatus according to any one of claims 6 to 8, wherein said first logic unit (11) and/or said second logic unit (12) are configured in such a way as to compare said data with said further data.

10. Apparatus according to any one of claims 6 to 10, wherein said first logic unit (11) and said second logic unit (12) are configured in such a way as to control said safety means (13) independently of one another.

11. Apparatus according to any preceding claim, and furthermore comprising control means (14, 15) of said logic unit means.

12. Apparatus according to claim 11 when appended to any one of claims 6 to 10, wherein said control means comprises first control means (14) arranged for controlling said first logic unit (11) and second control means (15) arranged for controlling said second logic unit (12).

13. Apparatus according to any preceding claim, and furthermore comprising voltage regulating means (18, 19, 20) that divides a supply circuit of said apparatus (4) into independent sectors.

14. Apparatus according to claim 13 when appended to claim 4, or to any one of claims 5 to 12 when appended to claim 4, wherein a first sector of said sectors supplies said safety means (13) and said outlet stage (17).

15. Apparatus according to claim 13, or 14 when claim 13 is appended to any one of claims 6 to 10, or to claim 11, or 12, when appended to any one of claims 6 to 10, wherein a second sector of said sectors supplies said first tilt sensor (9) and said first logic unit (11).

16. Apparatus according to claim 13, or 14 when claim 13 is appended to any one of claims 6 to 10, or to claim 11, or 12 when appended to any one of claims 6 to 10, or according to claim 15, wherein a third sector of said sectors supplies said second tilt sensor (9) and said second logic unit (11).

17. Apparatus according to any one of claims 14 to 16, and furthermore comprising protecting means arranged for protecting said first sector and/or said second sector and/or said third sector from short circuits, overvoltage and polarity reversals.

18. Method for controlling an electronic card, comprising acquiring through logic unit means (11) signals coming from sensor means (9), processing said signals to obtain data indicating the position of an organ (2) with which said sensor means (9) is associated, sending control signals to safety means (13), **characterised in that** it furthermore comprises, before said sending, transmitting through said logic unit means (11) said data to further logic unit means (12) of said electronic card and receiving through said logic unit means (11) further data from said further logic unit means (12).

19. Method according to claim 18, and furthermore comprising comparing through said logic unit means (11) said data with said further data.

20. Method according to claim 19, wherein said comparing comprises assessing whether said data are congruent with said further data.

21. Method according to claim 20, wherein said sending comprises enabling and/or keeping enabled said safety means (13), if said assessing has yielded a positive result.

22. Method according to claim 20, and furthermore comprising again acquiring said signals from said sensor means (9) through said logic unit means (11), if said assessing has yielded a negative result for a consecutive number of times that is less than a preset value.

23. Method according to claim 21, wherein after said enabling and/or after said keeping enabled controlling the actual enabling of said safety means (13) is provided.

24. Method according to claim 23, wherein, after said controlling, detecting the delay in enabling said safety means (13) is provided if said controlling has yielded a negative result.

25. Method according to claim 24, wherein said sending comprises disabling said safety means and sending an alarm signal, if said delay is greater than a preset value.

26. Method according to claim 24, and furthermore comprising again further acquiring said signals from said sensor means (9) through said logic unit means (11), if said delay is less than a preset value.

27. Method according to any one of claims 18 to 26, wherein, after said receiving and said transmitting, there is provided checking that the communication between said logic unit means (11) and said further logic unit means (12) is current and free of errors.

28. Method according to claim 27, wherein, after said checking, said comparing is provided if said checking has yielded a positive result.

29. Method according to claim 27, and furthermore comprising again transmitting said data to said further logic unit means (12) through said logic unit means (11) and again receiving through said logic unit means (11) said further data from said further logic unit means (12), if said checking has yielded a negative result for a consecutive number of times that is less than a preset value.

30. Method according to claim 27, wherein said sending comprises disabling said safety means (13) and generating an alarm signal, if said checking has yielded a negative result for a consecutive number of times that is greater than a preset value.

31. Method according to any one of claims 18 to 30, and furthermore comprising ascertaining through said logic unit means (11) the correct operation of said sensor means (9).

32. Method according to claim 31, wherein after said ascertaining said acquiring is provided if said ascertaining has yielded a positive result.

33. Method according to claim 31, and furthermore comprising further ascertaining through said logic unit means (11) of the correct operation of said sensor means (9), if said ascertaining has yielded a negative result.

34. Method according to claim 33, wherein said sending comprises disabling said safety means (13) and generating an alarm signal, if said further ascertaining has yielded a negative result for a preset consecutive number of times.

35. Method according to any one of claims 18 to 34, and furthermore comprising, parallel to said acquiring, to said processing, to said transmitting, to said receiving, to said sending, parallely acquiring through said further logic unit means (12) further signals from further sensor means (10), parallely processing said further signals for obtaining said further data indicating the position of said organ (2) with which said further sensor means (10) is associated, parallely transmitting through said further logic unit means (12) said further data to said logic unit means (11), parallely receiving said data from said logic unit means (11) through said further logic unit means (12), parallely sending further control signals to said safety means (13).

36. Method according to claim 35, and furthermore comprising parallely comparing said further data with said data through said further logic unit means (12).

37. Method according to claim 36, wherein said parallely comparing comprises parallely assessing whether said further data are congruent with said data.

38. Method according to claim 37, wherein said parallely sending comprises parallely enabling and/or parallely keeping enabled said safety means (13), if said parallely enabling has yielded a positive result.

39. Method according to claim 37, and furthermore comprising again parallely acquiring said further signals from said further sensor means (10) through said further logic unit means (12), if said parallely assessing has yielded a negative result for a consecutive number of times that is less than a preset value.

40. Method according to claim 38, wherein after said parallely enabling and/or after said parallely keeping enabled parallely controlling the actual enabling of said safety means (13) is provided.

41. Method according to claim 40, wherein after said parallely controlling parallely detecting the delay in the enabling time of said safety means (13) is provided, if said parallely controlling has yielded a negative result.

42. Method according to claim 41, wherein said parallely sending comprises parallely disabling said safety means and parallely emitting an alarm signal, if said delay is greater than a preset value.

43. Method according to claim 41, and furthermore comprising again further parallely acquiring said further signals from said further sensor means (10) through said further logic unit means (12), if said delay is less than a preset value.

44. Method according to any one of claims 35 to 43, wherein after said parallely receiving and said parallely transmitting there is provided parallely checking that communication between said further logic unit means (12) and said logic unit means (11) is current and free of errors.

45. Method according to claim 44, wherein after said parallely checking said parallely comparing is provided if said parallely checking has yielded a positive result.

46. Method according to claim 44, and furthermore again comprising parallely transmitting said data to said logic unit means (1) through said further logic unit means (12) and again parallely receiving through said further logic unit means (12) said data from said logic unit means (11), if said parallely checking has yielded a negative result for a consecutive number of times that is less than a preset value.

47. Method according to claim 44, wherein said parallely sending comprises parallely disabling said safety means (13) and parallely generating an alarm signal, if said parallely checking has yielded a negative result for a consecutive number of times that is greater than a preset value.

48. Method according to any one of claims 35 to 47, and furthermore comprising parallely ascertaining through said further logic unit means (12) the correct operation of said further sensor means (10).

49. Method according to claim 48, wherein after said parallely ascertaining said parallely acquiring is provided if said parallely ascertaining has yielded a positive result.

50. Method according to claim 48, and furthermore comprising further parallely ascertaining through said further logic unit means (12) the correct operation of said further sensor means (10), if said parallely ascertaining has yielded a negative result.

51. Method according to claim 50, wherein said parallely sending comprises parallely disabling said safety means (13) and parallely generating an alarm signal, if said further parallely ascertaining has yielded a negative result for a preset consecutive number of times.

52. Program that comprises a code for implementing the method according to claims 18 to 51 when the program is run in a computer system.

53. First program that comprises a code for implementing the method according to claims 18 to 34 restricted to said acquiring, to said processing, to said transmitting, to said receiving and to said sending, when the program is run in a computer system.

54. Second program that comprises a code for implementing the method according to claims 35 to 51 restricted to said parallely acquiring, to said parallely processing, to said parallely transmitting, to said parallely receiving and to said parallely sending, when the program is run in a computer system.

55. Support readable by a computer and that supports a program defined in claims 52, or 53, or 54.
